# EUROPÄISCHE PATENTANMELDUNG

(11) **EP 1 057 516 A1**
(43) Veröffentlichungstag der Anmeldung: **06.12.2000**
(21) Anmeldenummer: 00103867.8
(22) Anmeldetag: 24.02.2000
(51) Int. Cl.: B01D 53/04

(54) **Verfahren zur Adsorption von CS2**

(30) Priorität: 21.04.1999 DE 19917977
(71) Anmelder: Degussa-Hüls Aktiengesellschaft, 60287 Frankfurt am Main (DE)
(72) Erfinder: Frey, Thomas, 63776 Mömbris (DE); Niklaus, Anja, 60327 Frankfurt am Main (DE); Maier, Hans-Josef, 63755 Alzenau (DE); Sextl, Elfriede, 63826 Geiselbach (DE)

(57) **Zusammenfassung**

CS₂ wird aus Abgasen absorbiert, indem man als Adsorbens einen hydrophoben Zeolith verwendet.

## Beschreibung

Die Erfindung betrifft ein Verfahren zur Adsorption von CS₂ aus Abgasen.

Es ist bekannt, CS₂ (Schwefelkohlenstoff) aus Abgasen zu adsorbieren, wobei als Adsorptionsmittel Aktivkohle eingesetzt wird (Pechler et al., 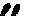 Abluftreinigung in der Viskoseindustrie", in Textil praxis international (1993) Seiten 311 bis 313).

Das bekannte Verfahren weißt den Nachteil auf, daß es bei der Aufarbeitung der Aktivkohle zu Bränden kommen kann. (Gefährliche chemische Reaktionen 16. Erg. 4g. 11/93 Seite 2). Aus diesem Grunde erfolgt die Desorption mit Wasserdampf, was sehr energieaufwendig ist. Anschließend muß eine Abtrennung des CS₂ von dem Wasser erfolgen.

Es ist bekannt, CS₂ an Zeolith 5A sowie Zeolith 13X zu adsorbieren (Pechler et al., Chem. Ing. Tech. 62 (1990) Nr. 9 Seiten 734 bis 735). Das Verfahren weist den Nachteil auf, daß bei hohen Luftfeuchten vorwiegend Wasser statt CS₂ adsorbiert wird.

Gegenstand der Erfindung ist ein Verfahren zur Adsorption von CS₂ aus Abgasen, welches dadurch gekennzeichnet ist, daß man als Adsorbens einen hydrophoben Zeolith verwendet.

Vorzugsweise kann man einen synthetischen hydrophoben Zeolithen verwenden, wobei dieser Zeolith ein dealuminierter Zeolith sein kann.

Besonders bevorzugt kann man den hydrophoben Zeolithen Wessalith®-DAZ verwenden. Der Wessalith®-DAZ kann ein Modul von 20 bis 2000, vorzugsweise von 500 - 1500 aufweisen. Die Hydrophobierung von DAZ erfolgt durch eine Calcinierung bei einer Temperatur größer 600°C bis 1000°C, vorzugsweise 650°C bis 800°C.

Der Zeolith Wessalith®-DAZ ist bekannt aus dem technischen Informationsblatt TI Wessalith-DAY und Wessalith-DAZ (Broschüren Nr.: KC 33-1-798). Die Synthese erfolgt gemäß dem Handbook of Molecular Sieves, Autor: Rosemarie Szotek, Verlag: van Nostrand Reinhold - New York (1992) Seite 520 ff.

Als Zeolith kann weiterhin ein dealuminierter Zeolith Y mit einem Modul (=molares SiO₂/Al₂O₃-Verhältnis) von 50 bis 500, vorzugsweise von 150 bis 300, insbesondere von 100 bis 200, eingesetzt werden.

Als hydrophoben Zeolithen kann man weiterhin ZSM-5 mit einem Modul von 20 bis 2000,vorzugsweise 500-1500, der in einem Temperaturbereich größer 600°C bis 800°C calciniert wird, verwenden.

In einer Ausführungsform der Erfindung können die hydrophoben Zeolithe in Wabenkörper oder Rotoren, sowie in Schüttschichtfiltern verwendet werden.

Der Zeolith Y SOWIE der Zeolith Wessalith®-DAZ können als geformte Zeolithe eingesetzt werden. Der geformte Zeolith Y ist bekannt aus DE-A 42 02 671.

Der Zeolith Wessalith®-DAZ kann analog dem Patent DE-A 42 02 671 geformt werden.

Das erfindungsgemäße Verfahren weist den Vorteil auf, daß die gleiche Adsorptionskapazität wie bei dem bekannten Adsorptionsmittel Aktivkohle genutzt werden kann. Vorteilhafterweise ist der Zeolith nicht brennbar. Eine Wasserdampfdesorption ist nicht erforderlich. Dadurch fällt auch keine aufwendige Abtrennung des CS₂ von dem Wasser an. Der Zeolith weist eine geringere katalytische Aktivität auf, sodaß weniger Nebenprodukte bei der Adsorption und/oder Desorption gebildet werden. Dies bedeutet einen geringeren Aufwand bei der Reaktivierung des Adsorptionsmittels Zeolith.

Das erfindungsgemäße Verfahren weist den Vorteil auf, daß die dealuminierten Zeolithe in ihrer Adsorptionsmischung nicht durch Wasserkoadsorption (zum Beispiel durch Luftfeuchtigkeit) beeinträchtigt werden.

Ebenso verläuft die Desorption ökonomischer, weil kaum adsorbiertes Wasser ausgetrieben werden muß.

Das erfindungsgemäße Verfahren kann vorteilhafterweise in der Viskoseindustrie eingesetzt werden.

Das erfindungsgemäße Verfahren hat den Vorteil, daß ein Glättungseffekt erzielt werden kann.

Ein weiterer Gegenstand der Erfindung ist ein Verfahren zum Verhindern der Beeinträchtigung oder Zerstörung von empfindlichen biologischen Abwasser- und/oder Abluft-Aufbereitungsanlagen bei der Einleitung von CS₂-haltigen Abgasen, welches dadurch gekennzeichnet ist, daß man zur Glättung der Konzentrationsspitzen die Abgase, die CS₂ - enthalten, über einen hydrophoben Zeolith leitet.

Unter Glättungseffekt wird die Tatsache verstanden, daß unterhalb der maximalen Beladungskapazität des Zeolithen Mengenspitzen des zu adsorbierenden Schwefelkohlenstoffes in dem Gasstrom durch den Zeolithen aufgenommen werden können und den Adsorbierausgang nur ein sehr geringer Ausstieg der Austrittskonzentration an CS₂ über einen längeren Zeitraum festgestellt wird. Diese vorteilhafte Eigenschaft des Zeolithen ist vorallem dann von Bedeutung, wenn das von CS₂ zu reinigende Gas einem empfindlichen Katalysator, einer Nachverbrennungsanlage oder einem empfindlichen biologischen Aufbereitungssystem für Abwasser und Abluft zugeführt werden soll.

Das erfindungsgemäße Verfahren kann sowohl in feuchten als auch in trockenen Systemen eingesetzt werden, weil die Beladungskapazität des Zeolithen mit CS₂ durch feuchte Abluftströme kaum beeinflußt wird. Die Beladungskapazität des Zeolithen ist abhängig von der Konzentration des CS₂-Gasstroms.

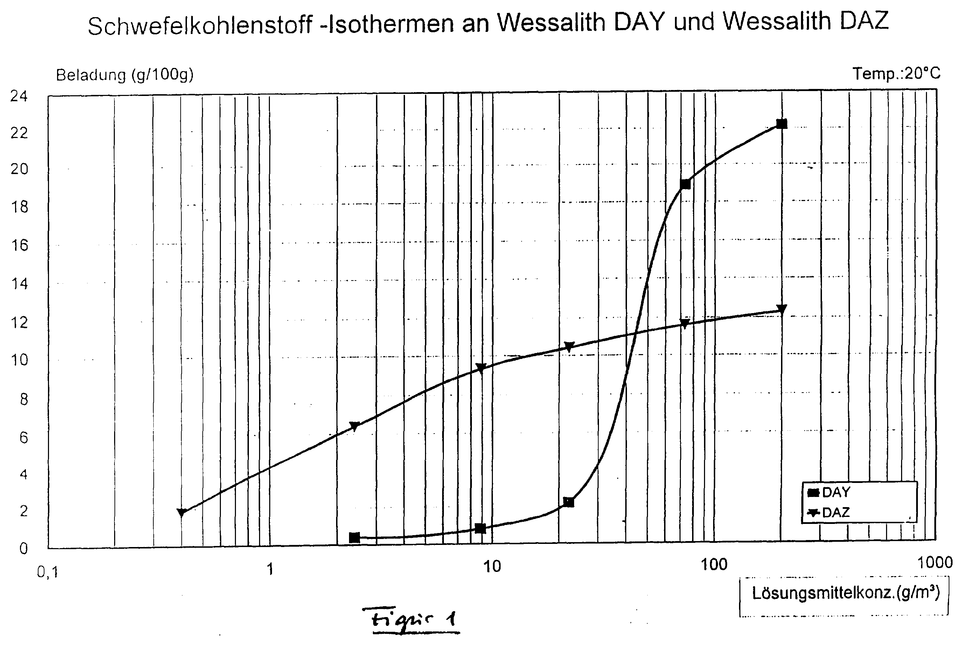

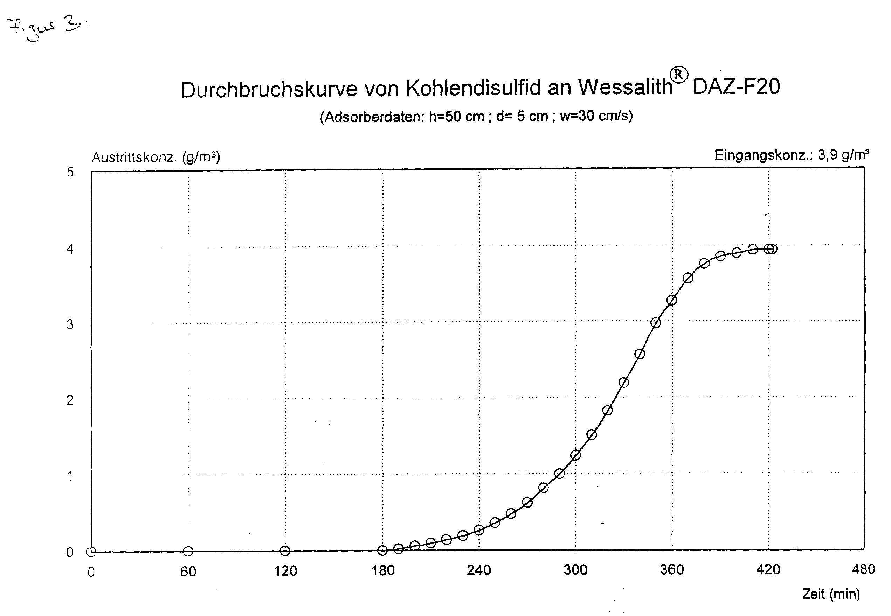

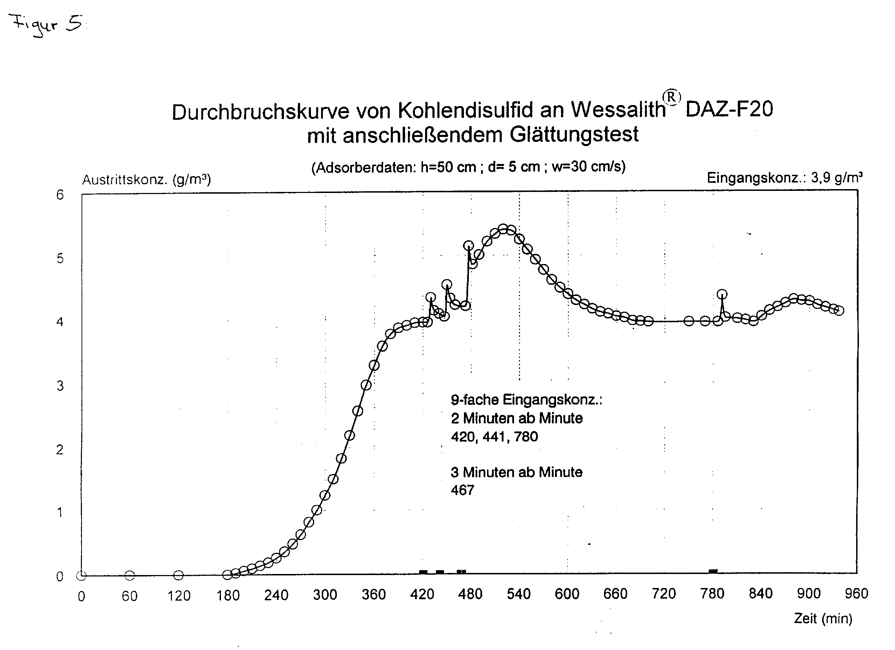

Das erfindungsgemäße Verfahren wird anhand der Figuren 1 bis 5 näher erläutert:
Figur 1 zeigt die Adsorptionsisotherme von CS₂ an Wessalith-DAY und Wessalith-DAZ (Auftragung der Beladung gegen die Lösungsmittelkonzentration). Es ist deutlich zu erkennen, daß Wessalith-DAZ für die niedrigen und Wessalith-DAY für die höheren Konzentrationsbereiche geeignet ist.

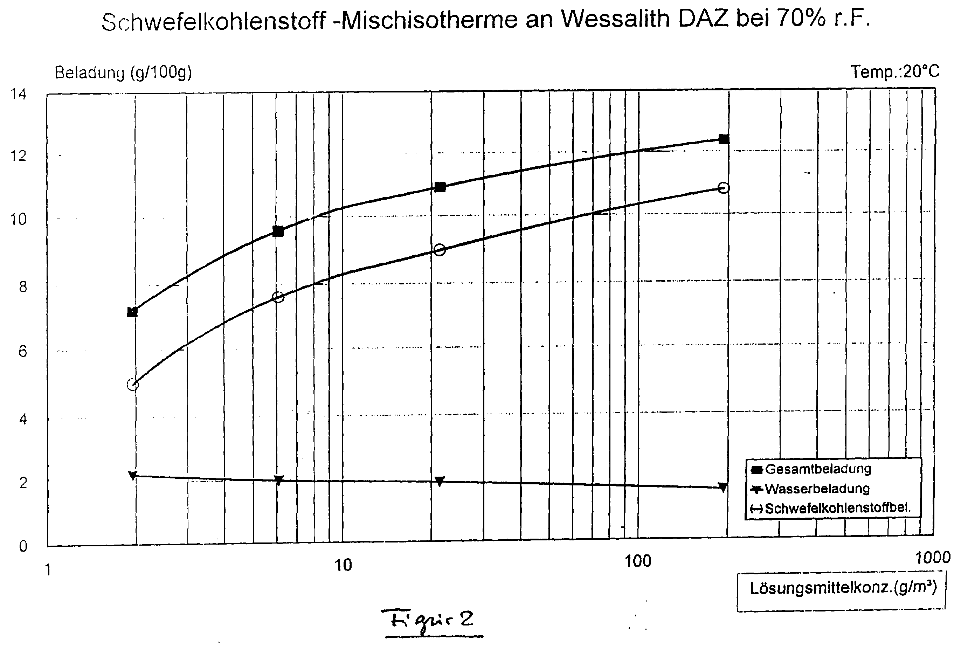

Figur 2 zeigt die Koadsorption von CS₂ und Wasser bei 70 % rel. Feuchte an Wessalith-DAZ. Die Beladung an Wasser ist sehr gering. Vergleicht man die CS₂-Beladung aus Figur 1 mit denen aus Figur 2, so ist erkennbar, daß beide Beladekapazitäten gleich groß sind. Die Aufnahmefähigkeit von CS₂ am Zeolithen wird durch 70 % Feuchte nicht beeinträchtigt.
   Die Beladung sowie die Adsorptionsisothermen werden durch bekannte Methoden ermittelt. Sie sind beschrieben in:
   Luftreinhaltung durch Adsorption und Oxidation
   von Dipl. -Ing. Harald Menig
   Deutscher Fachschriften-Verlag
   Braun & CO. KG
   Wiesbaden 1977
Figur 3 beschreibt die Durchbruchskurve von Schwefelkohlenstoff an Wessalith DAZ. Die Eingangskonzentration vor dem Adsorber beträgt 3,9 g/m³. Die Adsorberdaten betragen: h = 50 cm d = 5 cm, die Anströmgeschwindigkeit beträgt w = 30 cm/s. Die Austrittskonzentration (g/m³) ist in Abhängigkeit der Zeit (min) aufgetragen. Erkennbar ist, daß bei 180 min kein Schwefelkohlenstoff an Adsorberausgang detektiert wird.
   Danach beginnt das Adsorptiv langsam 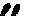 durchzubrechen". Nach 420 min ist die Aufnahmefähigkeit des Adsorbers erschöpft.
   Die Messung der Durchbruchskurven erfolgt analog wie in
   Berichte des Forschungszentrum Jülich; 2864 (Januar 1994)
   Chemische und Physiochemische Untersuchungen
   von Giuseppe Modolo
   ISSN 0944-2952
   beschrieben.

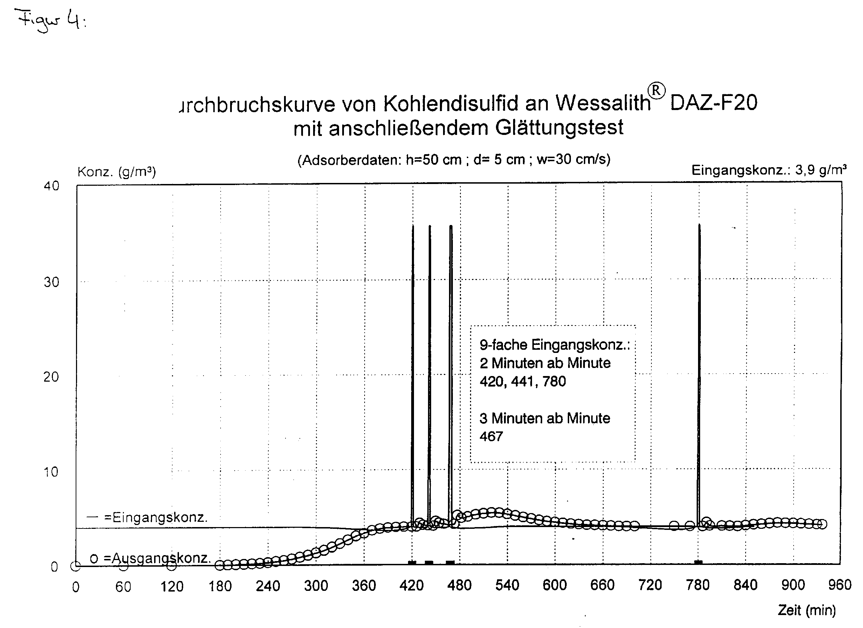

Figur 4 beschreibt eine Glättungskurve über einen Zeitraum von 900 min. Aufgetragen sind die Konzentrationen gegen die Zeit.
   Durchgezogen Linie ohne Kreise: Eingangskonzentration
   Durchgezogene Linie mit Kreise: Ausgangskonzentration
   Es werden insgesamt 4 Konzentrationspeaks vom neunfachen Wert der kontinuierlich gehaltenen Grundeingangskonzentration auf das Adsorberbett gegeben. Die Ausgangskonzentration steigt nicht einmal um die Hälfte an. (Dies wird besonders deutlich aus Figur 5, in welcher die Austrittskonzentration vergrößert dargestellt ist. Die Eingangskonzentration kann in diesem Maßstab nicht mehr dargestellt werden). Aus den Figuren 4 und 5 wird die besondere Glättungsfähigkeit von Wessalith DAZ deutlich.

(Allgemeine Beschreibung von Glättungskurven siehe Werner Kast, Adsorption aus der Gasphase:
Ingenieurtwissenschaftliche Grundlagen und technische Verfahren VCH 1988)

## Patentansprüche

1. Verfahren zur Adsorption von CS₂ aus Abgasen,
**dadurch gekennzeichnet,** daß man als Adsorbens einen hydrophoben Zeolith verwendet.

2. Verfahren nach Anspruch 1,
**dadurch gekennzeichnet,** daß man als Zeolith einen synthetischen hydrophoben Zeolith verwendet.

3. Verfahren nach Anspruch 2,
**dadurch gekennzeichnet,** daß man als synthetischen hydrophoben Zeolith einen dealuminierten Zeolith einsetzt.

4. Verfahren nach Anspruch 3,
**dadurch gekennzeichnet,** daß man als synthetischen hydrophoben Zeolith einen dealuminierte Zeolith Y mit einem Modul (molares SiO₂/Al₂O₃-Verhältis) von 50 bis 500 einsetzt.

5. Verfahren nach Anspruch 1 bis 2,
**dadurch gekennzeichnet,** daß man als hydrophoben Zeolithen ZSM-5 mit einem Modul von 20 bis 2000 der in einem Temperaturbereich größer 600°C bis 1000°C, vorzugsweise 650°C bis 800°C calciniert wird, verwendet.

6. Verfahren nach Anspruch 1 bis 5,
**dadurch gekennzeichnet**, daß man einen geformten Zeolith einsetzt.

7. Verfahren zum Verhindern der Beeinträchtigung oder Zerstörung von empfindlichen biologischen Abwasser- und/oder Abluft-Aufbereitunsanlagen oder Systemen bei der Einleitung von CS₂-haltigen Abgasen,
**dadurch gekennzeichnet,** daß man zur Glättung der Konzentrationsspitzen die Abgase, die CS₂ enthalten, über einen hydrophoben Zeolith leitet.

8. Verfahren nach Anspruch 1 bis 7,
**dadurch gekennzeichnet,** daß die hydrophoben Zeolithe in Wabenkörper oder Rotoren, sowie in Schüttschichtfiltern verwendet werden können.
